(19) **Europäisches Patentamt / European Patent Office / Office européen des brevets**

(11) **EP 1 302 076 B1**

(12) **EUROPÄISCHE PATENTSCHRIFT**

(45) Veröffentlichungstag und Bekanntmachung des Hinweises auf die Patenterteilung:
**21.05.2008   Patentblatt 2008/21**

(21) Anmeldenummer: **01949452.5**

(22) Anmeldetag: **29.06.2001**

(51) Int Cl.:
*H04N 7/18* (2006.01)      *B60R 1/00* (2006.01)

(86) Internationale Anmeldenummer:
**PCT/EP2001/007492**

(87) Internationale Veröffentlichungsnummer:
**WO 2002/009433 (31.01.2002 Gazette 2002/05)**

(54) **VORRICHTUNG UND VERFAHREN ZUR ÜBERWACHUNG DER UMGEBUNG EINES OBJEKTS**

DEVICE AND METHOD FOR MONITORING THE SURROUNDINGS OF AN OBJECT

DISPOSITIF ET PROCEDE POUR SURVEILLER L'ENVIRONNEMENT D'UN OBJET

(84) Benannte Vertragsstaaten:
**DE FR GB IT SE**

(30) Priorität: **20.07.2000   DE 10035223**

(43) Veröffentlichungstag der Anmeldung:
**16.04.2003   Patentblatt 2003/16**

(73) Patentinhaber: **Daimler AG**
**70327 Stuttgart (DE)**

(72) Erfinder:
• **DOBLER, Günter**
  **73776 Altbach (DE)**

• **ENIGK, Holger**
  **15834 Rangsdorf (DE)**
• **ROTHE, Siegfried**
  **73770 Denkendorf (DE)**
• **STECHOW, Roland**
  **70376 Stuttgart (DE)**

(56) Entgegenhaltungen:
EP-A- 0 949 818          DE-A- 4 304 005
DE-A- 19 923 964

• **PATENT ABSTRACTS OF JAPAN vol. 008, no. 248 (P-313), 14. November 1984 (1984-11-14) & JP 59 120877 A (AISHIN SEIKI KK;OTHERS: 01), 12. Juli 1984 (1984-07-12)**

**Beschreibung**

Die Erfindung betrifft eine Vorrichtung und ein Verfahren zur Überwachung der Umgebung eines Objekts nach dem Oberbegriff des Anspruches 1 bzw. 15.

Aus der Druckschrift GB 23 38 363 A ist es bekannt, den rückwärtigen Bereich eines Kraftfahrzeugs mit Hilfe von am Heck des Fahrzeugs befestigten Videokameras zu überwachen und die von den Videokameras gelieferten Bilder auf einem Monitor im Fahrerhaus darzustellen. Die Videokameras sollen hierbei den Rückspiegel des Fahrzeugs ersetzen und insbesondere einen vollständigen Ausblick nach hinten unter Ausschluss von toten Winkeln gewährleisten. Darüber hinaus können die Einzelbilder der Videokameras zu einem Panoramabild zusammengesetzt werden, so dass auf nur einem Bild ein größerer Überblick über den Bereich hinter dem Fahrzeug dargestellt werden kann.

Die aus der GB 23 38 363 A bekannte Überwachungsvorrichtung kann als Ersatz für einen bzw. für mehrere Rückspiegel eingesetzt werden und bietet zum einen den Vorteil, dass ein verhältnismäßig großer Bereich nach hinten auf einem Gesamtbild dargestellt werden kann und zum anderen das Gesamtbild auf einem Monitor gezeigt werden kann, welcher sich in der Fahrerkabine im unmittelbaren Blickbereich des Fahrers befindet, so dass der Fahrer den Kopf in Geradeausrichtung halten kann und dennoch den rückwärtigen Bereich überblicken kann.

Ein Nachteil dieser Anordnung liegt darin, dass die von den Einzelkameras aufgenommenen Einzelbilder, welche zum Gesamtbild zusammengesetzt werden, jeweils etwa die gleiche Blickrichtung entgegengesetzt zur VorwärtsFahrtrichtung des Fahrzeuges haben und dadurch insbesondere auf Grund perspektivischer Verzerrungen die Distanz zu sich dem Fahrzeugheck nähernden Hindernissen nur schwer eingeschätzt werden kann.

Der Erfindung liegt das Problem zugrunde, die Überwachung der Umgebung eines Objekts so einfach wie möglich zu gestalten. Die von einer Überwachungsvorrichtung gelieferten Bilder sollen zweckmäßig die tatsächliche Situation weitgehend verzerrungsfrei und direkt erfassbar wiedergeben.

Dieses Problem wird erfindungsgemäß mit den Merkmalen des Anspruches 1 bzw. 15 gelöst.

Die neuartige Überwachungsvorrichtung umfasst eine Mehrzahl von Hindernis-Erfassungseinrichtungen - insbesondere Videokameras -, wobei zumindest zwei unmittelbar benachbarte Erfassungseinrichtungen sich überschneidende Blickfelder aufweisen. Die Bilder werden in einer Auswerteeinheit zu einem Gesamtbild zusammengesetzt, wobei der Überlappungsbereich bzw. Überschneidungsbereich in der Auswertung berücksichtigt und als kontinuierlicher Übergang zwischen den Einzeldarstellungen benachbarter Erfassungseinrichtungen dargestellt wird. Mit den sich überschneidenden Blickfeldern kann eine lückenlose Überwachung erzeugt werden; tote Winkel bzw. nicht einsehbare Zonen zwischen benachbarten Erfassungseinrichtungen können vermieden werden.

Für eine optimale Darstellung wird das zu überwachende Objekt in das Gesamtbild hineinprojiziert und auf der optischen Anzeigeeinrichtung als Teil des Gesamtbildes dargestellt. Hierdurch werden auf der Anzeigeeinrichtung sowohl das zu überwachende Objekt als auch die zu überwachende Umgebung des Objektes dargestellt und sämtliche umgebende Hindernisse oder Fremdobjekte optisch in Bezug zum zu überwachenden Objekt gesetzt. Die Überwachungsperson kann ohne weiteres auf der Anzeigeeinrichtung die Relativposition des zu überwachenden Objekts in Bezug auf ein Fremdobjekt erkennen. Das auf der optischen Anzeigeeinrichtung dargestellte Gesamtbild ist hierbei zweckmäßig eine maßstabs- und/oder richtungsgenaue Wiedergabe der tatsächlichen Situation, wobei insbesondere die Längs- und die Querachse des dargestellten Fahrzeugs mit den entsprechenden Achsen des realen Fahrzeugs übereinstimmt.

Die Überwachungsvorrichtung ist zweckmäßig selbstjustierend ausgebildet, indem beispielsweise identische Pixel aus dem Überschneidungsbereich benachbarter Blickfelder erkannt werden.

Es können sowohl mobile als auch immobile bzw. stationär angeordnete Objekte überwacht werden. Bei mobilen Objekten kommt insbesondere eine Überwachung von Fahrzeugen wie Personenkraftwagen oder Lastkraftwagen in Betracht. Durch die Zusammenschaltung einer Mehrzahl optischer Hindernis-Erfassungseinrich-tungen, von denen zwei unmittelbar benachbarte jeweils ein sich überschneidendes Blickfeld aufweisen, kann ein Gesamtbild geschaffen werden, das bei Einsatz zusätzlicher Erfassungseinrichtungen im Prinzip beliebig erweiterbar ist, so dass gegebenenfalls der gesamte Bereich um das Objekt herum - bei Fahrzeugen der gesamte das Fahrzeug umgebende Bereich - überwacht, auf nur einem Gesamtbild dargestellt und in einen Bezug zum zu überwachenden Objekt gesetzt werden kann. Ein derartiges Gesamtbild repräsentiert eine Rundum-Ansicht, so dass die Überwachungsperson, insbesondere der Fahrer, mit einem Blick den gesamten Außenbereich um das zu überwachende Objekt erfassen kann.

Vorteilhaft sind die Blickachsen der Erfassungseinrichtungen zum Boden hin gerichtet, wodurch ein Gesamtbild entsteht, das dem Bild aus einer Vogelperspektive entspricht, in dessen Zentrum sich das zu überwachende Objekt befindet. Diese Perspektive ist insbesondere bei Fahrzeugen besonders schnell und einfach von der Überwachungsperson bzw. dem Fahrer zu erfassen.

Das zu überwachende Objekt ist innerhalb des Gesamtbildes zweckmäßig ein künstlich erzeugtes Ersatzbild, das beispielsweise als einfache Grafik, welche den Umriss des Objektes repräsentiert, in das Gesamtbild hineinprojiziert wird. Die Erfassungseinrichtungen sind insbesondere bei Fahrzeugen in der Weise positioniert, dass auch die Seitenkanten des Objekts noch mit erfasst werden, um Blindzonen und tote Winkel in unmittelbarer Nähe zum Objekt zu vermeiden. Der äußere Radius des zu überwachenden Bereichs, in dessen Zentrum sich das zu überwachende Objekt befindet, wird insbesondere bei bewegten Objekten ausreichend groß gewählt, um dem Fahrer zumindest bei langsamer Fahrt die Möglichkeit zu einer Ausweichreaktion bzw. Bremsreaktion bei plötzlich auftretenden Hindernissen zu geben. Die Hindernis-Erfassungseinrichtungen werden zweckmäßig bewegbar am zu überwachenden Objekt montiert, damit während der Fahrt oder auch bei Stillstand selbsttätig oder auf Anforderung der Überwachungsperson mit zunehmender Geschwindigkeit auf einen größeren Überwachungsradius verschwenkt werden kann, wobei in diesem Fall eine Blindzone im unmittelbaren Nahbereich zum zu überwachenden Objekt gegebenenfalls in Kauf genommen werden kann. Eine Veränderung des Blickfeldes kann bei Verwendung von Kameras als Erfassungseinrichtungen auch durch ein Zoomen des Kamerabildes durchgeführt werden. Die Perspektive einer oder auch mehrerer Erfassungseinrichtungen kann veränderlich eingestellt werden, beispielsweise über einen Joy-Stick oder ähnliche Bedienelemente.

Als Hindernis-Erfassungseinrichtungen kommen sowohl optische Systeme wie Kameras als auch Abtastsysteme, die auf Infrarot, Radar oder akustischen Schwingungen basieren, in Betracht. Das Hindernis bzw. das Fremdobjekt wird von der Erfassungseinrichtung abgetastet bzw. optisch erfasst und im Auswertesystem in ein optisches Gesamtbild umgesetzt, in das ein Abbild des zu überwachenden Objektes hineinprojiziert wird.

Die Überwachung des Objekts kann auch als Hintergrundfunktion realisiert sein, indem auf eine permanente Anzeige auf der Anzeigeeinrichtung verzichtet wird und die Anzeige nur für den Fall aktiviert wird, dass eine Auslösebedingung erfüllt ist. Beispielsweise kann die Hintergrundfunktion zur Überwachung des parkenden Fahrzeugs aktiviert werden, wobei durch Auswertung der Signale der Erfassungseinrichtungen vom System selbstständig entschieden wird, ob das Fahrzeug und die Umgebung des Fahrzeugs auf der Anzeigeeinrichtung dargestellt wird und/oder ein Warnsignal erzeugt wird.

Weitere Vorteile und zweckmäßige Ausführungen sind den weiteren Ansprüchen, der Figurenbeschreibung und den Zeichnungen zu entnehmen. Es zeigen:

Fig. 1      eine perspektivische Ansicht eines Sattelzuges mit Auflieger, mit einer Mehrzahl von an der Oberkante des Fahrerhauses und des Aufliegers befestigten Kameras,

Fig. 2a      eine Darstellung der Überwachungsvorrichtung in Vogelperspektive,

Fig. 2b      das auf einer optischen Anzeigeeinrichtung dargestellte Gesamtbild,

Fig. 3a      eine schematische Darstellung des Fahrzeuges mit gegenüber der Zugmaschine abgeknicktem Auflieger,

Fig. 3b      eine Fig. 3a entsprechende Darstellung, mit einer Messeinrichtung auf der Zugmaschine zur Messung des Knickwinkels des Aufliegers gegenüber der Zugmaschine,

Fig. 3c      eine Fig. 3a entsprechende Darstellung, jedoch mit eingezeichneten Blickfeldern von mehreren Überwachungskameras auf gegenüberliegenden Seiten des Fahrzeugs,

Fig. 4      das Fahrzeug in einer Rangiersituation mit zusätzlichen externen Überwachungskameras,

Fig. 5      eine Darstellung sich schneidender räumlicher Blickkegel von zwei benachbarten Kameras,

Fig. 6      ein Ausschnitt aus dem Heckbereich des Fahrzeugs mit jeweils einer Kamera an jeder Seite und einer Kamera am Heck,

Fig. 7a,b      eine mobile Erfassungseinrichtung mit abnehmbaren und aufladbaren Kameras,

Fig. 8a      eine Darstellung des Heckbereichs des Fahrzeugs in Seitenansicht mit in den rückwärtigen Bereich gerichteten Ultraschalloder Infrarotsensoren mit horizontaler Blickachse parallel zum Boden,

Fig. 8b      eine Fig. 8a entsprechende Darstellung, jedoch mit schräg auf den Boden gerichteten Ultraschall- oder Infrarotsensoren .

In den folgenden Figuren sind gleiche Bauteile mit gleichen Bezugszeichen versehen.

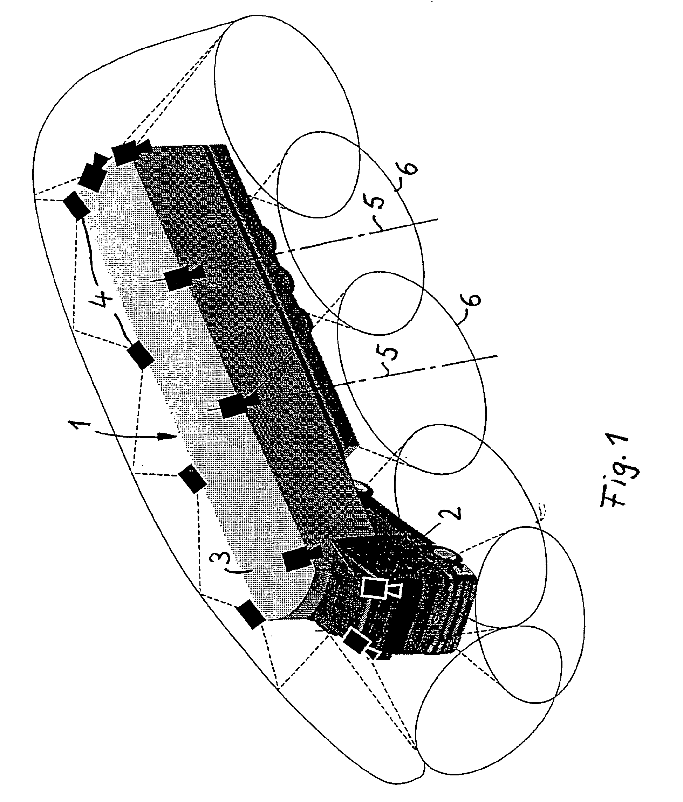

In der perspektivischen Darstellung nach Fig. 1 ist ein Fahrzeug 1 gezeigt, welches im Ausführungsbeispiel als Sattelzug mit einer Zugmaschine 2 und einem von der Zugmaschine gezogenen Auflieger 3 ausgeführt ist. Das Fahrzeug 1 ist mit einer Überwachungsvorrichtung zur Umgebungsüberwachung ausgestattet, die eine Mehrzahl von am Fahrzeug 1 befestigten Kameras 4 umfasst, deren Einzelbilder zur Auswertung einer Auswerteeinheit, die im Fahrzeug 1 mitgeführt wird, zugeführt werden. In der Auswerteeinheit werden die Einzelbilder der Kameras 4 zu einem Gesamtbild zusammengesetzt und auf einem im unmittelbaren Sichtbereich des Fahrers gelegenen Monitor dargestellt. Die Überwachungsvorrichtung ermöglicht ein Erkennen von Hindernissen, welche in das Blickfeld der Kameras 4 gelangen, so dass der Fahrer rechtzeitig und in geeigneter Weise auf die Hindernisse reagieren kann.

Die Kameras 4 sind zur Darstellung einer 360°-Perspektive über den Umfang des Fahrzeugs 1 verteilt angeordnet. Die Kameras sind etwa auf gleicher Höhe im oberen Bereich des Fahrzeugs befestigt. Die Blickachsen 5 der Kameras weisen schräg nach unten auf den Boden; auf Grund der zum Boden hin geneigten Blickrichtung der Kameras entsteht auf dem Boden ein etwa elliptisches Blickfeld 6 für jede Kamera 4. Jeweils zwei benachbarte Kameras sind in der Weise aufeinander ausgerichtet, dass sich ihre Blickfelder 6 auf dem Boden überschneiden. Dadurch entsteht ein das Fahrzeug 1 lückenlos umgebender, bandförmiger Überwachungsbereich. Die Überschneidungsflächen in den Blickfeldern 6 benachbarter Kameras werden in der Auswerteeinheit in der Weise berücksichtigt, dass ein scharfes, von einem Blickfeld zum nächsten kontinuierlich fortschreitendes Gesamtbild entsteht. Zweckmäßig liegen die Blickachsen unmittelbar benachbarter Kameras 4 im Wesentlichen parallel zueinander bzw. schließen einen nur kleinen Winkel ein, um sicherzustellen, dass benachbarte Blickfelder 6 etwa die gleiche Perspektive haben, so dass keine oder nur geringfügige Verzerrungen zwischen benachbarten Blickfeldern 6 entstehen.

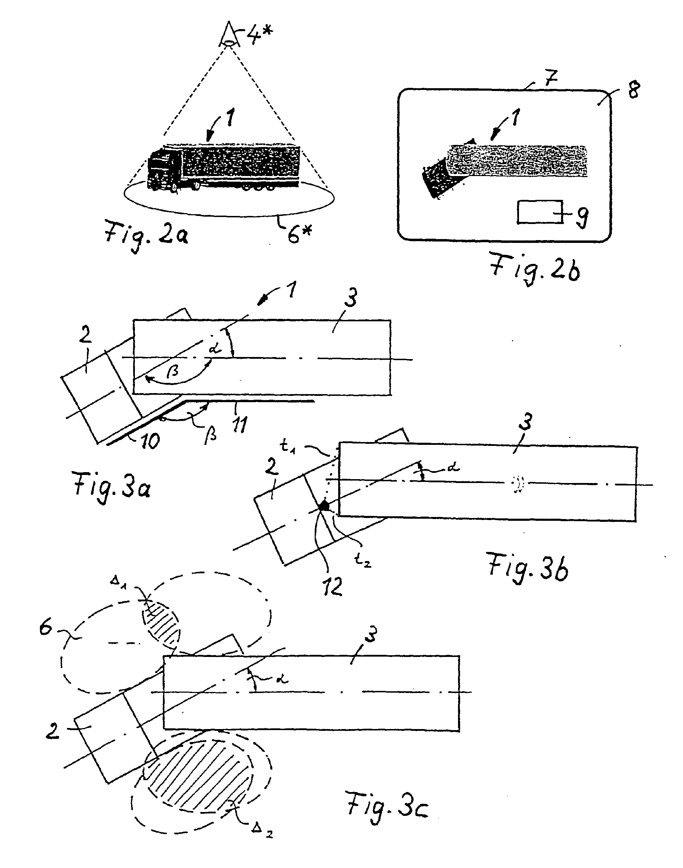

In Bezug auf eine Lotrechte zum Boden weisen die Blickachsen 5 einen Neigungswinkel auf. Die Blickachsen 5 der Kameras 4 schneiden sich in einem Punkt bzw. durchstechen eine verhältnismäßig kleine hypothetische Fläche, welche sich über dem Fahrzeug 1 befindet und eine Vogelperspektive markiert. Diese Vogelperspektive ist in Fig. 2a symbolisch mit einer einzelnen, oberhalb des Fahrzeugs 1 befindlichen Kamera 4* angedeutet, mit der das Fahrzeug 1 mit einem theoretisch möglichen Einzelblickfeld 6* aufgenommen werden kann.

Fig. 2b zeigt das dem Fahrer auf einem Monitor 7 darzustellende Gesamtbild des Fahrzeugs 1 aus der Vogelperspektive, das aus den in Fig. 1 gezeigten Einzelbildern zusammengesetzt ist. Das Fahrzeug 1 wird in das Gesamtbild 8 hineinprojiziert und kann als künstliches grafisches Objekt dargestellt werden. Die Proportionen des Fahrzeugs 1 werden zweckmäßig maßstabsgetreu in das Gesamtbild 8 eingeblendet. Hindernisse 9 im Gesamtbild 8, welche von den Kameras erfasst werden, stellen ein vom Fahrer am Monitor 7 direkt wahrzunehmendes Fremdobjekt dar, das als konkretes Bild dargestellt wird und dessen Relativposition und Relativ-Winkellage zum Fahrzeug 1 dem Gesamtbild 8 entnommen werden kann.

Für den Fall, dass anstelle von Kameras alternative Erfassungseinrichtungen verwendet werden, beispielsweise Infrarot, Radar oder akustische Einrichtungen, mit denen das Fremdobjekt visuell nicht direkt darstellbar ist, können in der Auswerteeinheit künstliche grafische Objekte in das Gesamtbild 8 projiziert werden, welche das Fremdobjekt repräsentieren sollen.

Zur Darstellung einer möglichst präzisen Draufsicht auf den das Fahrzeug umgebenden Bereich ist es erforderlich, den Knickwinkel $\alpha$ zwischen Zugmaschine 2 und Auflieger 3 zu bestimmen. Dies kann gemäß einer ersten Ausführung mit Hilfe einer Kantentraktion durchgeführt werden, bei der optisch die aufeinander zulaufenden Seitenkanten 10 und 11 der Zugmaschine 2 bzw. des Aufliegers 3 bestimmt werden und in der Auswerteeinheit der Winkel $\beta$ zwischen den Kanten 10 und 11 ermittelt wird, welcher den Komplementärwinkel zum Knickwinkel $\alpha$ repräsentiert. Der Knickwinkel $\alpha$ berechnet sich dann zu

$$\alpha = 180° - \beta.$$

In einer weiteren Ausführung kann, wie in Fig. 3b dargestellt, der Knickwinkel $\alpha$ auch mit Hilfe eines Triangulationsverfahrens bestimmt werden, indem eine beispielsweise auf der Zugmaschine 2 angeordnete Messeinrichtung 12 die Laufzeit von Strahlen $t_1$ und $t_2$ misst, welche von der Messeinrichtung 12 zu den vorderen Seitenkanten des Aufliegers 3 ausgesandt werden. Aus der Laufzeitdifferenz Strahlen $t_1$ und $t_2$ kann auf den Knickwinkel $\alpha$ geschlossen werden.

Wie Fig. 3c zu entnehmen, kann der Knickwinkel $\alpha$ auch aus dem aktuellen Überschneidungsgrad unmittelbar benachbarter Blickfelder 6 im Bereich der Knickachse des Fahrzeuges ermittelt werden. Im Bereich der Knickachse des Fahrzeugs entstehen Überschneidungsbereiche, welche eine Funktion des Knickwinkels $\alpha$ sind. Je nach Relativlage von Zugmaschine 2 und Auflieger 3 sind die Überschneidungsbereiche $\Delta_1$ bzw. $\Delta_2$ auf den gegenüberliegenden Fahrzeugseiten in der Nähe der Knickachse kleiner bzw. größer als bei geradestehendem Fahrzeug. Aus dem Unterschied im Überschneidungsgrad gegenüberliegender Überschneidungsbereiche $\Delta_1$ bzw. $\Delta_2$ kann auf den Knickwinkel $\alpha$ geschlossen werden. Es ist aber auch möglich, nur an Hand der Kenntnis des Überschneidungsgrades eines einzigen Überschneidungsbereiches $\Delta_1$ oder $\Delta_2$ auf den Knickwinkel $\alpha$ zu schließen.

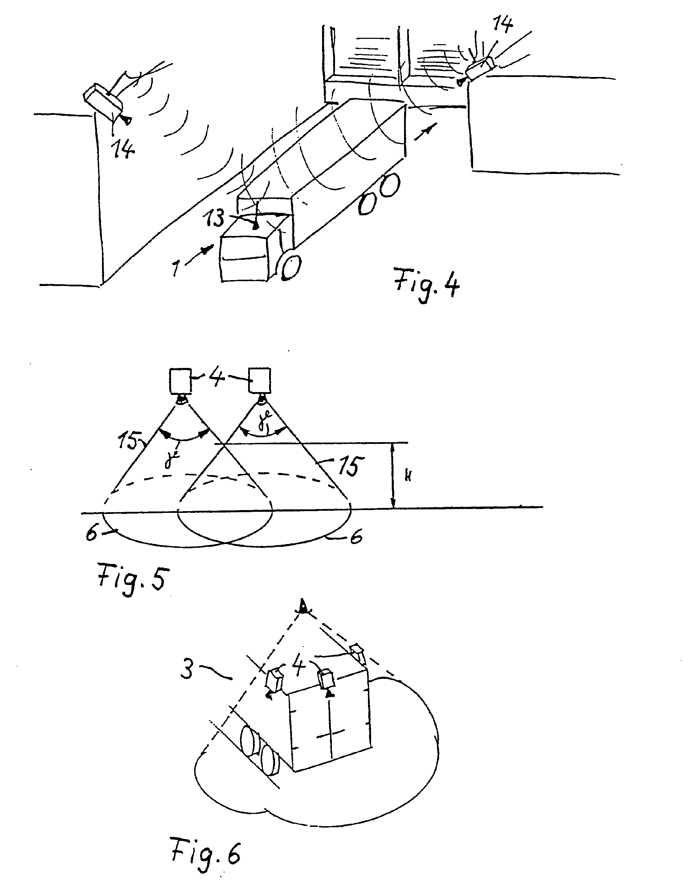

Das in Fig. 4 dargestellte Fahrzeug 1 ist mit einer Empfangs-einrichtung 13 versehen, über die Bilder externer Kameras 14, welche stationär beispielsweise in engen Hofeinfahrten angeordnet sind, zu empfangen sind. Die Bilder der externen Kameras 14 werden zusätzlich zu den von den fahrzeugeigenen Hindernis-Erfassungseinrichtungen erzeugten Bildern berücksichtigt und gemeinsam mit diesen Bildern zu einem Gesamtbild verarbeitet. Durch die Berücksichtigung der externen Kameras 14 kann der zu überwachende Bereich vergrößert werden.

Fig. 5 zeigt die Aufnahmekegel 15 von zwei benachbarten Kameras 4 am Fahrzeug. Die Aufnahmekegel 15 erzeugen jeweils ein Blickfeld 6 am Boden, wobei der Grad der Überschneidung der beiden Aufnahmekegel 15 von der Höhe der Kameras 4 über dem Boden und dem Kegelwinkel $\gamma$ der Aufnahmekegel 15 abhängt. Die beiden Aufnahmekegel 15 schneiden sich in einer Höhe H über dem Boden; sämtliche Fremdobjekte innerhalb der Aufnahmekegel 15 werden optisch erfasst und auf dem Gesamtbild dargestellt. Fremdobjekte, welche sich außerhalb der Aufnahmekegel 15 befinden, beispielsweise in dem oberhalb der Höhe H gelegenen Zwischenraum zwischen den Kameras, werden dagegen nicht mehr erfasst.

Wie Fig. 6 zu entnehmen, kann es ausreichend sein, lediglich einen Teilbereich rings um das Fahrzeug zu überwachen. Gemäß Fig. 6 sind im Heckbereich des Aufliegers 3 insgesamt drei Kameras 4 angeordnet, zwei an gegenüberliegenden Seitenbereichen und eine Kamera an der Rückseite des Fahrzeugs. Sämtliche Kameras 4 sind im Bereich der Oberkante des Fahrzeugs angeordnet, die Blickachse der Kameras ist schräg nach unten gerichtet.

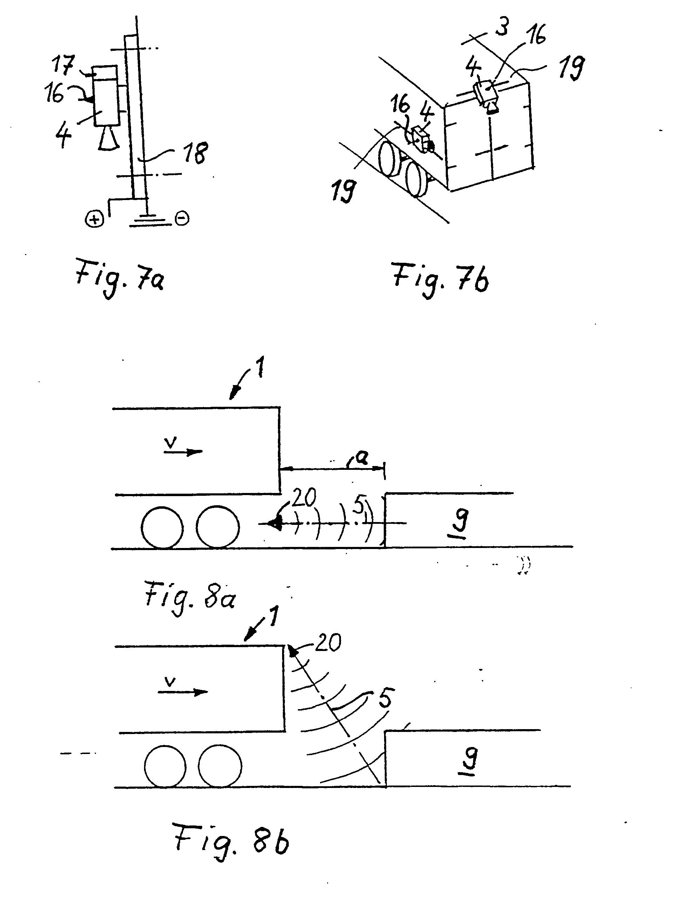

Die Figuren 7a und 7b zeigen eine mobile Erfassungseinrichtung, die im Ausführungsbeispiel als Kamera 4 ausgeführt ist. Um die Anzahl der benötigten Überwachungskameras so gering wie möglich zu halten, reicht es aus, bei wechselnden Aufliegern jeweils nur den aktuell mitgeführten Auflieger mit einem Überwachungssystem auszurüsten. Hierfür kann das in Fig. 7a und 7b gezeigte mobile Kamerasystem eingesetzt werden.

In Fig. 7a ist eine mobile Kamera 4, insbesondere eine Funkkamera, mit einer Sendeeinheit 16 und einer wiederaufladbaren Batterie 17 ausgestattet. Die Kamera kann an einer zweckmäßig im Fahrerhaus angeordneten Halterung 18 eingehängt werden, die mit einer Stromversorgung zum Aufladen der Batterie 17 der Kamera 4 ausgerüstet ist. Die mobile Kamera 4 kann nach der Aufladung und bei Bedarf in eine an der Fahrzeugaußenseite angeordnete Aufnahmeschiene 19 am Fahrzeug eingesetzt werden (Fig. 7b). Über die Sendeeinheit 16 an jeder Kamera 4 werden die aufgenommenen Bilder an eine im Fahrzeug mitgeführte Auswerteeinheit übertragen und dort zu einem anzuzeigenden Gesamtbild zusammengesetzt. Es kann gegebenenfalls zweckmäßig sein, lediglich das Bild einer Einzelkamera darzustellen. Weiterhin ist es möglich, die mobile Kamera ergänzend zur stationären Überwachungsvorrichtung vorzusehen.

Die Figuren 8a und 8b zeigen die Vorteile unterschiedlicher Anordnungen und Ausrichtungen von Sensoren 20 am Fahrzeug 1. Gemäß Fig. 8a ist ein Sensor 20 - Infrarot oder Ultraschall - am unteren, rückwärtigen Bereich des Fahrzeuges 1 zur Überwachung des Heckbereichs des Fahrzeuges angeordnet und mit horizontaler Blickachse 5 ausgerichtet. Bei Rückwärtsfahrt des Fahrzeugs 1 kann daher der Abstand a zu einem Hindernis 9 bestimmt werden.

Gemäß Fig. 8b ist der Sensor 20 im Heckbereich an der Oberkante des Fahrzeuges 1 angeordnet, ihre Blickachse 5 ist schräg nach unten in den rückwärtigen Heckbereich gerichtet. In dieser Anordnung können alle Hindernisse und Fremdobjekte, welche sich im Aufnahmekegel Sensors 20 befinden, bis zur Höhe des Sensors 20 gegenüber dem Boden erfasst werden.

## Patentansprüche

1. Vorrichtung zur Überwachung der Umgebung eines Objekts mit Hilfe eines Hindernis-Erfassungssystems, das eine Mehrzahl von am Objekt befestigten Hindernis-Erfassungseinrichtungen, eine Auswerteeinheit zur Auswertung und/oder Erzeugung mindestens eines von den Hindernis-Erfassungsrich- tungen aufgenommenen Bildes des Hindernisses und eine optische Anzeigeeinrichtung zur Darstellung des Bildes umfasst,
**dadurch gekennzeichnet,**
**dass** die Blickfelder (6) von zwei benachbarten Hindernis-Erfassungseinrichtungen sich überschneiden, dass die Einzelbilder benachbarter Hindernis-Erfassungseinrichtungen zu einem zusammenhängenden Gesamtbild zusammensetzbar sind und dass das Objekt auf der optischen Anzeigeeinrichtung in das Gesamtbild projizierbar und als Teil des Gesamtbilds darstellbar ist.

2. Vorrichtung nach Anspruch 1,
**dadurch gekennzeichnet,**
**dass** das Objekt ein Fahrzeug (1) ist.

3. Vorrichtung nach Anspruch 1,
**dadurch gekennzeichnet,**
**dass** das Objekt stationär angeordnet ist.

4. Vorrichtung nach einem der Ansprüche 1 bis 3,
**dadurch gekennzeichnet,**
**dass** die Hindernis-Erfassungseinrichtungen über den Umfang des Objekts verteilt zur Darstellung einer 360°-Perspektive angeordnet sind.

5. Vorrichtung nach einem der Ansprüche 1 bis 4,
**dadurch gekennzeichnet,**
**dass** die Blickachsen von zwei unmittelbar nebeneinander angeordneten Hindernis-Erfassungseinrichtungen im Wesentlichen parallel zueinander verlaufen.

6. Vorrichtung nach einem der Ansprüche 1 bis 5,
**dadurch gekennzeichnet,**
**dass** die Blickachsen aller Hindernis-Erfassungseinrichtungen zum Boden hin gerichtet sind.

7. Vorrichtung nach einem der Ansprüche 1 bis 6,
**dadurch gekennzeichnet,**
**dass** das Objekt als künstlich erzeugtes Ersatzbild auf der optischen Anzeigeeinrichtung darstellbar ist.

8. Vorrichtung nach einem der Ansprüche 1 bis 7,
**dadurch gekennzeichnet,**
**dass** zumindest eine Hindernis-Erfassungseinrichtung als optische Kamera (4) ausgeführt ist.

9. Vorrichtung nach einem der Ansprüche 1 bis 8,
**dadurch gekennzeichnet,**
**dass** zumindest eine Hindernis-Erfassungseinrichtung als Infrarot-Abtastsystem ausgeführt ist.

10. Vorrichtung nach einem der Ansprüche 1 bis 9,
**dadurch gekennzeichnet,**
**dass** zumindest eine Hindernis-Erfassungseinrichtung als Radarsystem ausgeführt ist.

**11.** Vorrichtung nach einem der Ansprüche 1 bis 10, **dadurch gekennzeichnet, dass** zumindest eine Hindernis-Erfassungseinrichtung als akustisches System ausgeführt ist.

**12.** Vorrichtung nach einem der Ansprüche 1 bis 11, **dadurch gekennzeichnet, dass** die optische Anzeigeeinrichtung ein Monitor (7) ist.

**13.** Vorrichtung nach einem der Ansprüche 1 bis 12, **dadurch gekennzeichnet, dass** zumindest eine Hindernis-Erfassungseinrichtung am Objekt bewegbar, insbesondere schwenkbar, angeordnet ist.

**14.** Vorrichtung nach einem der Ansprüche 1 bis 13, **dadurch gekennzeichnet, dass** zumindest eine externe, außerhalb des Objekts angeordnete Hindernis-Erfassungseinrichtung vorgesehen ist, deren Signale an die Auswerteeinheit übertragbar sind.

**15.** Verfahren zur Überwachung der Umgebung eines Objekts mit Hilfe eines Hindernis-Erfassungssystems, insbesondere Verfahren zum Betrieb der Vorrichtung nach einem der vorhergehenden Ansprüche, bei dem aus einem Nahbereich des Objekts ein Bild erzeugt und optisch angezeigt wird, **dadurch gekennzeichnet, dass** eine Mehrzahl von Einzelbildern mit sich überschneidendem Blickfeld erzeugt werden, dass die Einzelbilder zu einem Gesamtbild zusammengesetzt werden und dass das Objekt in das Gesamtbild projiziert und als Teil des Gesamtbilds optisch dargestellt wird.

**Claims**

**1.** Apparatus for monitoring the surroundings of an object with the aid of an obstacle-detecting system which comprises a plurality of obstacle-detecting devices fastened on the object, an evaluation unit for evaluating and/or producing at least one image, recorded by the obstacle-detecting devices, of the obstacle, and an optical display device for displaying the image, **characterized in that** the fields of view (6) of two neighbouring obstacle-detecting devices intersect, **in that** the individual images of neighbouring obstacle-detecting devices can be combined to form a coherent overall image, and **in that** the object can be projected on the optical display device into the overall image, and can be displayed as part of the overall image.

**2.** Apparatus according to Claim 1, **characterized in that** the object is a vehicle (1).

**3.** Apparatus according to Claim 1, **characterized in that** the object is arranged in a stationary fashion.

**4.** Apparatus according to one of Claims 1 to 3, **characterized in that** the obstacle-detecting devices are arranged distributed over the circumference of the object for the purpose of representing a 360° perspective.

**5.** Apparatus according to one of Claims 1 to 4, **characterized in that** the viewing axes of two obstacle-detecting devices arranged directly next to one another run substantially parallel to one another.

**6.** Apparatus according to one of Claims 1 to 5, **characterized in that** the viewing axes of all the obstacle-detecting devices are directed towards the ground.

**7.** Apparatus according to one of Claims 1 to 6, **characterized in** the object can be displayed as an artificially produced equivalent image on the optical display device.

**8.** Apparatus according to one of Claims 1 to 7, **characterized in that** at least one obstacle-detecting device is designed as an optical camera (4).

**9.** Apparatus according to one of Claims 1 to 8, **characterized in that** at least one obstacle-detecting device is designed as an infrared scanning system.

**10.** Apparatus according to one of Claims 1 to 9, **characterized in that** at least one obstacle-detecting device is designed as a radar system.

**11.** Apparatus according to one of Claims 1 to 10, **characterized in that** at least one obstacle-detecting device is designed as an acoustic system.

**12.** Apparatus according to one of Claims 1 to 11, **characterized in that** the optical display device is a monitor (7).

**13.** Apparatus according to one of Claims 1 to 12, **characterized in that** at least one obstacle-detecting device is arranged on the object in a moveable, in particular pivotable fashion.

**14.** Apparatus according to one of Claims 1 to 13, **characterized in that** at least one external obstacle-detecting device arranged outside the object is provided whose signals can be transmitted to the evaluation unit.

**15.** Method for monitoring the surroundings of an object with the aid of an obstacle-detecting system, in particular a method for operating the apparatus according to one of the preceding claims, in which method an image is produced from the near zone of the object and optically displayed, **characterized in that** a plurality of individual images with mutually intersecting fields of view are produced, **in that** the individual images are combined to form an overall image, and **in that** the object is projected into the overall image and optically displayed as part of the overall image.

## Revendications

1. Dispositif de surveillance de l'environnement d'un objet à l'aide d'un système de détection d'obstacle qui comprend une pluralité de dispositifs de détection d'obstacle fixés à l'objet, une unité d'interprétation pour interpréter et/ou générer au moins une image de l'obstacle enregistrée par les dispositifs de détection d'obstacle et un dispositif d'affichage optique pour représenter l'image, **caractérisé en ce que** les champs de vision (6) de deux dispositifs de détection d'obstacle voisins se recoupent, que les images individuelles de dispositifs de détection d'obstacle voisins peuvent être assemblées en une image globale cohérente et que l'objet peut être projeté sur le dispositif d'affichage optique dans l'image globale et peut être représenté en tant que partie de l'image globale.

2. Dispositif selon la revendication 1, **caractérisé en ce que** l'objet est un véhicule (1).

3. Dispositif selon la revendication 1, **caractérisé en ce que** l'objet est en position fixe.

4. Dispositif selon l'une des revendications 1 à 3, **caractérisé en ce que** les dispositifs de détection d'obstacle sont répartis sur le pourtour de l'objet afin de représenter une perspective de 360°.

5. Dispositif selon l'une des revendications 1 à 4, **caractérisé en ce que** les axes de vision de deux dispositifs de détection d'obstacle disposés directement l'un à côté de l'autre s'étendent pour l'essentiel parallèlement l'un à l'autre.

6. Dispositif selon l'une des revendications 1 à 5, **caractérisé en ce que** les axes de vision de tous les dispositifs de détection d'obstacle sont dirigés vers le sol.

7. Dispositif selon l'une des revendications 1 à 6, **caractérisé en ce que** l'objet peut être représenté sur le dispositif d'affichage optique sous la forme d'une image virtuelle générée artificiellement.

8. Dispositif selon l'une des revendications 1 à 7, **caractérisé en ce que** l'au moins un dispositif de détection d'obstacle est réalisé sous la forme d'une caméra optique (4).

9. Dispositif selon l'une des revendications 1 à 8, **caractérisé en ce que** l'au moins un dispositif de détection d'obstacle est réalisé sous la forme d'un système de détection à infrarouge.

10. Dispositif selon l'une des revendications 1 à 9, **caractérisé en ce que** l'au moins un dispositif de détection d'obstacle est réalisé sous la forme d'un système radar.

11. Dispositif selon l'une des revendications 1 à 10, **caractérisé en ce que** l'au moins un dispositif de détection d'obstacle est réalisé sous la forme d'un système acoustique.

12. Dispositif selon l'une des revendications 1 à 11, **caractérisé en ce que** le dispositif d'affichage optique est un moniteur (7).

13. Dispositif selon l'une des revendications 1 à 12, **caractérisé en ce que** l'au moins un dispositif de détection d'obstacle est monté sur l'objet de manière à pouvoir bouger, notamment pivoter.

14. Dispositif selon l'une des revendications 1 à 13, **caractérisé en ce qu'**il est prévu au moins un dispositif de détection d'obstacle externe disposé à l'extérieur de l'objet et dont les signaux peuvent être transmis à l'unité d'interprétation.

15. Procédé de surveillance de l'environnement d'un objet à l'aide d'un système de détection d'obstacle, notamment procédé de fonctionnement du dispositif selon l'une des revendications précédentes, avec lequel une image est générée dans le champ proche de l'objet puis affichée optiquement, **caractérisé en ce qu'**une pluralité d'images individuelles est générée dont les champs de vision se recoupent, que les images individuelles sont assemblées en une image globale et que l'objet est projeté dans l'image globale et est représenté optiquement en tant que partie de l'image globale.

Fig. 1

Fig. 2a

Fig. 2b

Fig. 3a

Fig. 3b

Fig. 3c

Fig. 4

Fig. 5

Fig. 6

Fig. 7a

Fig. 7b

Fig. 8a

Fig. 8b

**EP 1 302 076 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2338363 A